Europäisches Patentamt

European Patent Office

Office européen des brevets

(19)

(11) Veröffentlichungsnummer: **0 204 967**
**B1**

# (12) EUROPÄISCHE PATENTSCHRIFT

(45) Veröffentlichungstag der Patentschrift:
30.08.89

(51) Int. Cl.⁴: **A01D 90/04**

(21) Anmeldenummer: 86106280.0

(22) Anmeldetag: 07.05.86

(54) **Ladewagen mit Schleifeinrichtung.**

(30) Priorität: 05.06.85 DE 3520273

(43) Veröffentlichungstag der Anmeldung:
17.12.86 Patentblatt 86/51

(45) Bekanntmachung des Hinweises auf die Patenterteilung:
30.08.89 Patentblatt 89/35

(84) Benannte Vertragsstaaten:
AT CH FR IT LI NL

(56) Entgegenhaltungen:
DE-A- 3 323 116
DE-B- 1 229 774
US-A- 3 958 766

(73) Patentinhaber: GREENLAND GMBH & CO. KG,
Erwin-Dietrich-Platz 1, D-7702 Gottmadingen(DE)

(72) Erfinder: Hug, Franz, Sieblerstrasse 25,
D-7702 Gottmadingen(DE)

(74) Vertreter: Patentanwälte Grünecker, Kinkeldey,
Stockmair & Partner, Maximilianstrasse 58,
D-8000 München 22(DE)

## Beschreibung

Die Erfindung betrifft einen Ladewagen mit einer Aufnahmevorrichtung für das Erntegut, einem sich daran anschließenden Förderkanal, der von einer mit Öffnungen versehenen Oberwand einer mit Öffnungen versehenen absenkbaren Unterwand und zwei feststehenden Seitenwänden begrenzt ist, wobei die Oberwand von Förderzinken einer Förderanordnung durchsetzt ist und die Unterwand von mindestens einer Reihe von auf der Unterwand befestigten Schneidmessern durchsetzt ist und mit einer im Bereich des Förderkanals vorgesehenen, auf einem Führungsrohr angeordneten Schleifeinrichtung für die Schneidmesser, die quer zur Förderrichtung des Förderkanals verschiebbar ist.

Bei einem derartigen, mit Schneidmessern versehenen Ladewagen nützen sich die Schneidmesser je nach Futterart, Schnittgeschwindigkeit, Schnittbreite oder aber auch durch eindringende Fremdkörper, wie Steine, mehr oder weniger schnell ab, so daß sie in bestimmten Zeitabständen nachgeschliffen werden müssen.

Es war lange Zeit üblich, die einzelnen Messer dazu von der Schneideinrichtung zu lösen und manuell nachzuschleifen. Es ist klar, daß ein derartiger Schleifvorgang sehr zeitaufwendig ist und zu ungleichmäßigen Schleifergebnissen führt.

In der DE-OS 33 23 116 wurde daher bereits vorgeschlagen, zur Zeitersparnis und zur Erzielung eines konstanten Schliffs eine demontierbare Schleifeinrichtung im Bereich des Vorderkanals vorzusehen, die ein Nachschleifen der Schneidmesser auch in ihrem eingebauten Zustand ermöglicht. Zu diesem Zweck wird in den Seitenwänden des Förderkanals ein Querrohr manuell eingeschoben und verriegelt, auf dem ein in Längsrichtung verschiebbares Schwenklager angeordnet ist, das über einen Schwenksteg die Schleifeinrichtung trägt. Nach dem Schleifen einer Messerreihe wird das Querrohr entfernt und in ein weiteres Paar Aufnahmebohrungen eingesetzt und dort erneut verriegelt, so daß eine weitere Messerreihe geschliffen werden kann.

Aufgabe der vorliegenden Erfindung ist es, den Schleifvorgang der Schneidmesser eines Ladewagens zu erleichtern und zu beschleunigen und so die Stillstandszeiten des Ladewagens zu verringern.

Ausgehend von einem Ladewagen der eingangs näher genannten Art wird zur Lösung dieser Aufgabe vorgeschlagen, daß das Führungsrohr beidseitig des Förderkanals über je ein Kniegelenksystem mit den Seitenwänden des Gehäuses des Förderkanals dauerhaft verbunden ist.

Die erfindungsgemäß ausgebildete Aufhängung der Schleifeinrichtung kann ständig am Ladewagen mitgeführt werden und ist an jedem beliebigen Einsatzort des Ladewagens betriebsfähig. Die Einsatzbereitschaft der Schleifeinrichtung für die Schneidmesser erfolgt ausschließlich von ihrer Ruhestellung außerhalb des Förderkanals durch Verschwenken des Kniegelenksystems, so daß das mühsame Ein- und Umstecken des Querrohrs für die Schleifeinrichtung entfällt.

Das Kniegelenksystem besteht vorzugsweise aus einem am Förderkanal drehbar befestigten Zwischenschwenkhebel und aus einem drehbar an ihm befestigten Schwenkarm, der das Führungsrohr für die Schleifeinrichtung trägt.

Das Führungsrohr ist vorteilhafterweise ein Vierkantrohr, das im Schwenkarm zur exakten Einstellung des Schwenkradius in mehreren Positionen feststellbar ist.

Die Schleifeinrichtung kann mit einem Hydraulikmotor, einem Elektromotor oder aber einer vom Schlepper angetriebenen biegsamen Welle verbunden sein.

Besonders vorteilhaft ist es, wenn die beiden Hebel des Kniegelenksystems in Arbeitsstellung des Ladewagens über einen Schwenkzapfen am Gehäuse des Förderkanals feststellbar sind, der an ihrer Verbindungsstelle angeordnet ist.

Der Schwenkzapfen ist vorzugsweise hohl, wobei in ihm ein federbelasteter Arretierbolzen verschiebbar angeordnet ist und wobei auf dem Schwenkzapfen ein axial verschiebbarer Zwischenring mit gewölbter Lagerfläche angeordnet ist, auf dem sich der Schwenkhebel abstützt.

Diese Ausgestaltung weist den Vorteil auf, daß der aus Schwenkhebel und Vierkantrohr gebildete Schwenkrahmen für die Schleifeinrichtung auf dem Schwenkzapfen axial etwas verschiebbar ist und die Schleifeinrichtung einseitig umgesteckt werden kann, so daß nur eine Person zu ihrer Bedienung erforderlich ist.

Vorzugsweise ist einer der beiden Schwenkhebel gekrümmt, damit auch das ihm benachbarte außenliegende Messer einer Messerreihe geschliffen werden kann.

Das Kniegelenksystem ist vorteilhafterweise in jeder Schleifstellung mittels des Schwenkzapfens verriegelbar.

Zur genauen Ausrichtung der einzelnen zu schleifenden Messerreihen ist die Unterwand des Förderkanals vorteilhafterweise mit den an ihr angelenkten Schneidmessern durch Fixierstreben in verschiedenen Positionen einstellbar.

Eine besonders einfache Auslösung der Schleifeinrichtung erhält man, wenn die Schwenkzapfen über eine gemeinsame Entriegelungsvorrichtung zur gleichzeitigen Entriegelung verbunden sind.

In diesem Fall genügt es, wenn die Bedienungsperson von einer Betätigungsstelle die beiden Schwenkzapfen entriegelt, das Kniegelenksystem verschwenkt, bis es eine der beiden Schleifpositionen einnimmt und dort erneut verriegelt.

Im folgenden wird die Erfindung anhand der Zeichnung näher erläutert, in der ein vorteilhaftes Ausführungsbeispiel dargestellt ist. Es zeigen:

Fig. 1 eine schematische Seitenansicht durch das Vorderteil eines Ladewagens mit einer Schleifeinrichtung in Ruhestellung;

Fig. 2 eine schematische Ansicht dieses Vorderteils des Ladewagens mit der Schleifeinrichtung in einer ersten Schleifposition;

Fig. 3 eine Draufsicht auf die Schleifeinrichtung;

Fig. 4 eine vergrößerte Darstellung des Schwenkzapfens zur Verriegelung der Schleifeinrichtung.

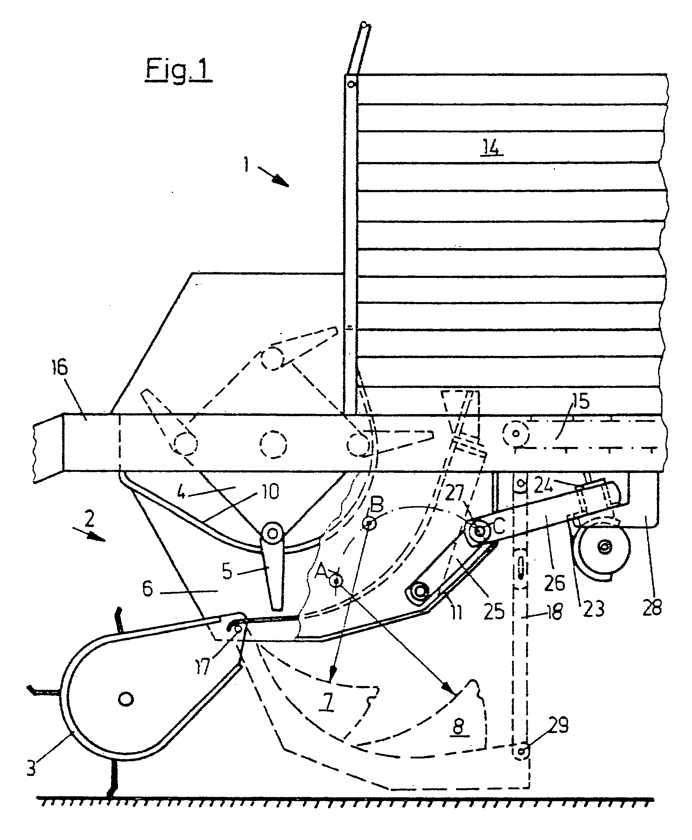

In Fig. 1 ist schematisch der vordere Teil des Ladewagens 1 mit einer Aufnahmevorrichtung dargestellt, die aus einer Pick-up-Vorrichtung 3 und einer nachfolgenden Förderanordnung 4 besteht, welche mit Förderzinken 5 versehen ist. Die Förderzinken 5 wirken in einem Förderkanal 6 mit in Reihen angeordneten Schneidmessern 7, 8 zusammen, die mit einer Überlastsicherung 9 gesichert sind.

Der Förderkanal 6 wird von einer mit Durchtrittsöffnungen versehenen Oberwand 10, einer mit Öffnungen versehenen Unterwand 11, sowie von zwei Seitenwänden 12, 13 begrenzt. Er mündet in einen Laderaum 14, welcher nur teilweise dargestellt ist. Dieser Laderaum ist mit einem nicht dargestellten Fahrgestell und einer Entladevorrichtung versehen, der das aufgenommene Gut mittels eines Kratzbodens 15 zugeführt wird. Der Ladewagen wird über eine Deichsel 16 mit einem nicht dargestellten Schlepper verbunden.

Die untere Wand 11 ist um eine ortsfeste Schwenkachse 17 an ihrem der Pick-up-Vorrichtung zugewandten Ende absenkbar. Diese Absenkung wird durch eine Verstelleinrichtung 18 begrenzt, wobei beim Absenken der Bodenwand 11 auch die Schneidmesser 7,8 mitabgesenkt werden. Desweiteren sind die Schneidmesser 7, 8 zusätzlich um Achsen 19 und 20 aus dem Förderkanal 6 ausschwenkbar, ohne daß die Bodenwand 11 abgesenkt werden muß, um so Fremdkörper passieren zu lassen. Die Schneidmesser 7 sind hierzu an einem Messerträger 21 schwenkbar gelagert und über eine Feststelleinrichtung 22 fixierbar.

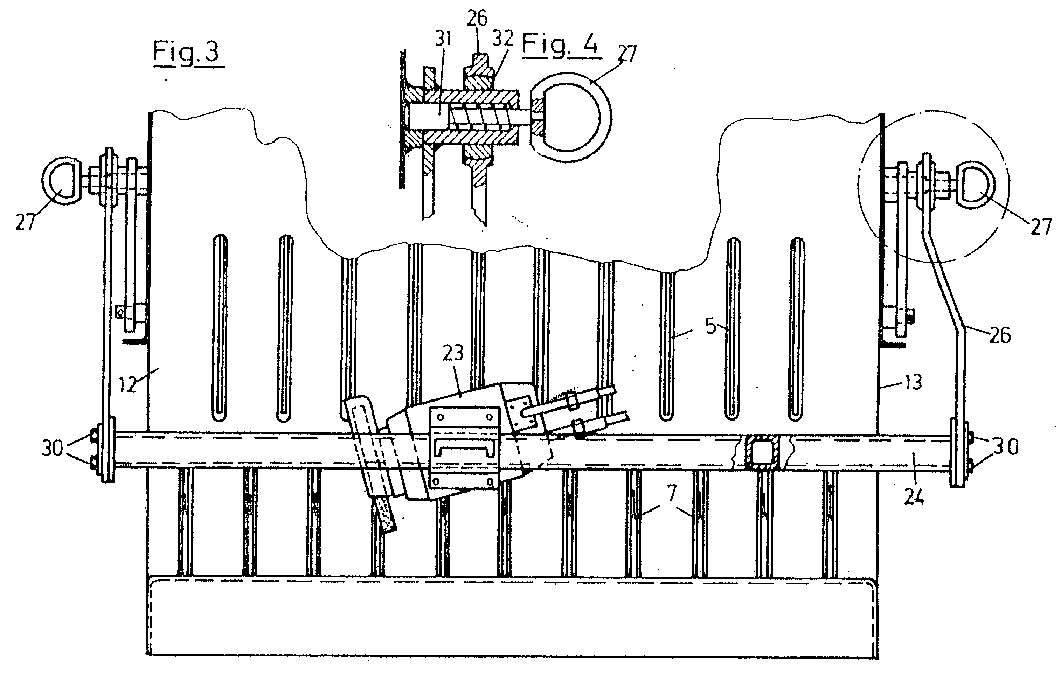

Um nun jederzeit die Schneidmesser 7, 8 nachschleifen zu können, ist eine Schleifeinrichtung 23 vorgesehen, die über ein Kniegelenksystem an den Seitenwänden 12, 13 des Förderkanals gelagert ist. Das Kniegelenksystem besteht aus einem ersten, am Förderkanal drehbar gelagerten Zwischenschwenkhebel 25 und aus einem drehbar an ihm befestigten Schwenkarm 26, der das Führungsrohr 24 für die Schleifeinrichtung 23 trägt. Das Führungsrohr 24 ist vorzugsweise ein Vierkantrohr, das im Schwenkarm 26 zum exakten Einstellen des Schwenkradius in mehreren Positionen feststellbar ist mittels Feststellschrauben 30 (Fig. 3).

In Fig. 1 ist die Schleifeinrichtung in ihrer Transportstellung, d.h. in Arbeitsstellung des Ladewagens dargestellt. Der Zwischenschwenkhebel 25 ist in der hinteren Stellung mittels eines Schwenkzapfens 27 arretiert und hält die Schleifeinrichtung 23 samt dem zugehörigen Vierkantrohr 24 in den beidseitig am Ladewagen vorgesehenen Traggabeln 28. In dieser Stellung kann die mit den Schneidmessern 7, 8 versehene Unterwand 11 des Förderkanals mittels der Verstelleinrichtung 18 abgesenkt werden.

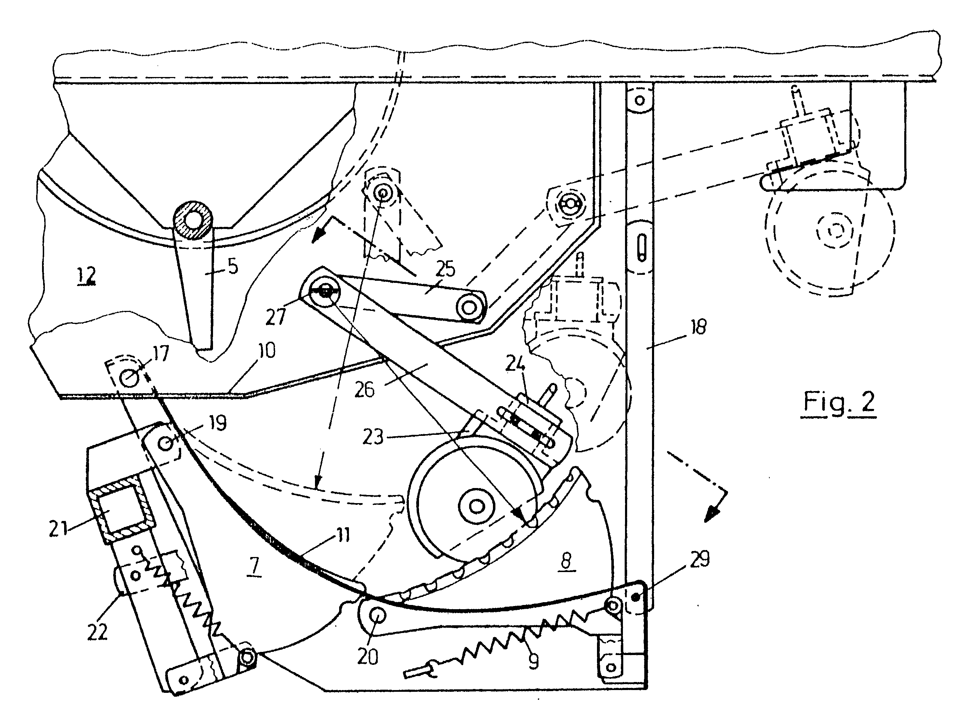

In Fig. 2 ist die Schleifrichtung in einer ihrer beiden Schleifstellungn verschwenkt worden, wie die ausgezogenen Linien erkennen lassen. Nach dem Absenken der Unterwand 11 und Einnahme der entsprechenden Position durch die Fixierstreben 29 wird der Schwenkzapfen 27 entriegelt, so daß das aus den beiden Hebeln 25, 26 bestehende Kniegelenksystem verschwenkt werden kann bis zu der vorderen Schleifstellung (A in Fig. 1), wodurch die hintere Messerreihe 8 geschliffen werden kann. Nachdem die hintere Messerreihe 8 geschliffen worden ist, kann der an der gemeinsamen Verbindung der beiden Hebel 25, 26 vorgesehene Schwenkzapfen 27 aus der Position A entriegelt und in die zweite Schleifposition B verschwenkt und dort verriegelt werden, so daß nun die vordere Messerreihe 7 geschliffen werden kann.

In Fig. 3 ist die Schleifeinrichtung 23 im Bereich der einzelnen Messer entsprechend der Linie D-D der Fig. 2 dargestellt. Als Antrieb für die Schleifscheibe kommt ein Hydraulikmotor, ein Elektromotor oder auch eine biegsame Welle in Frage, die mit dem Zapfwellenanschluß des Schleppers verbindbar ist. Wie Fig. 3 fernerhin erkennen läßt, ist der eine der beiden Schwenkarme 26 derart gekröpft, daß auch das äußerste, ihm benachbarte Messer einer jeden Messerreihe durch die Schleifeinrichtung 23 geschliffen werden kann.

Die Schleifeinrichtung 23 ist auf dem Vierkantrohr 24 in dessen Längsrichtung verschiebbar gelagert und so angeordnet, daß die Schleifscheibe einen Winkel mit den Schneidmessern 7, 8 einschließt. Dies ist erforderlich, damit die Schneidkanten der Messer entsprechend schräg geschliffen werden.

In Fig. 4 ist der zur Verriegelung des Kniegelenksystems erforderliche Schwenkzapfen 27 vergrößert dargestellt. Er ist als Hohlkörper ausgeführt und mit einem Zugring versehen, wobei in dem Hohlraum ein federbelasteter Arretierbolzen 31 eingesetzt ist. Auf dem Schwenkzapfen 27 sitzt ein axial verschiebbarer Zwischenring 32 mit gewölbter Oberfläche, welcher im Schwenkhebel 26 eingebettet ist. Dadurch wird ermöglicht, daß der aus Schwenkhebel 26 und Vierkantrohr 24 gebildete Schwenkrahmen für die Schleifeinrichtung 23 auf dem Schwenkzapfen 27 mit axialem Spiel gelagert ist. Gleichzeitig können auch in geringem Maße Kippbewegungen dieses Schwenkrahmens ausgeglichen werden.

Nach Stillsetzen der Aufnahmevorrichtung 2, Absenken der Unterwand 11 durch die Verstelleinrichtung 18 um die Schwenkachse 17 und Verschwenken der Schleifeinrichtung 23 samt dem sie tragenden Schwenkrahmen in eine der beiden Schleifpositionen kann die erste Messerreihe geschliffen werden. Zu diesem Zweck kann die Schleifeinrichtung 23 mittels eines Handhebels an den Messerschneiden entlanggeführt werden, wobei jedes Messer einzeln geschliffen wird. Damit die Schleifscheibe nicht einseitig abgenützt wird, kann diese um 180° verdrehbar am Vierkantrohr 24 gelagert sein.

Zur Vereinfachung der Entriegelung der Schwenkzapfen 27 ist es möglich, jedem Schwenkzapfen ein Betätigungsgestänge zuzuordnen, welche über einen gemeinsamen Seilzug gleichzeitig beaufschlagbar sind. Somit ist es möglich eine gleichzeitige Entriegelung von einer Stelle aus vorzunehmen.

**Patentansprüche**

1. Ladewagen mit einer Aufnahmevorrichtung (3) für das Erntegut, einem sich daran anschließenden Förderkanal (6), der von einer mit Öffnungen versehenen Oberwand (10), einer mit Öffnungen versehenen absenkbaren Unterwand (11) und zwei feststehenden Seitenwänden begrenzt ist, wobei die Oberwand von Förderzinken (5) einer Förderanordnung (4) und die Unterwand von mindestens einer Reihe von auf der Unterwand befestigten Schneidmessern (7, 8) durchsetzt ist, und mit einer im Bereich des Förderkanals vorgesehenen, auf einem Führungsrohr angeordneten Schleifeinrichtung (23) für die Schneidmesser, die quer zur Förderrichtung des Förderkanals verschiebbar ist, dadurch gekennzeichnet, daß das Führungsrohr (24) beidseitig des Förderkanals (6) über je ein Kniegelenksystem mit den Seitenwänden des Gehäuses des Förderkanals dauerhaft verbunden ist.

2. Ladewagen nach Anspruch 1, dadurch gekennzeichnet, daß das Kniegelenksystem aus einem an der Seitenwand des Förderkanals drehbar befestigten Zwischenschwenkhebel (25) und aus einem drehbar an ihm befestigten Schwenkarm (26) besteht, der das Führungsrohr (24) für die Schleifeinrichtung (23) trägt.

3. Ladewagen nach Anspruch 2, dadurch gekennzeichnet, daß das Führungsrohr (24) ein Vierkantrohr ist, das im Schwenkarm (26) zur exakten Einstellung des Schwenkradius in mehreren Positionen feststellbar ist.

4. Ladewagen nach Anspruch 1, dadurch gekennzeichnet, daß die Schleifeinrichtung mit einem Hydraulikmotor, einem Elektromotor oder einer vom Schlepper angetriebenen biegsamen Welle verbunden ist.

5. Ladewagen nach einem der vorhergehenden Ansprüche, dadurch gekennzeichnet, daß die beiden Hebel (25, 26) des Kniegelenksystems in Arbeitsstellung des Ladewagens über einen Schwenkzapfen (27) am Gehäuse des Förderkanals feststellbar sind, der an ihrer Verbindungsstelle angeordnet ist.

6. Ladewagen nach Anspruch 5, dadurch gekennzeichnet, daß der Schwenkzapfen (27) innen hohl ist, daß in ihm ein federbelasteter Arretierbolzen (31) verschiebbar angeordnet ist und daß auf dem Schwenkzapfen (27) ein axial verschiebbarer Zwischenring (32) mit gewölbter Lagerfläche angeordnet ist, auf dem sich der Schwenkhebel (26) abstützt.

7. Ladewagen nach Anspruch 6, dadurch gekennzeichnet, daß einer der Schwenkhebel (26) gekröpft ist.

8. Ladewagen nach Anspruch 2, dadurch gekennzeichnet, daß das Kniegelenksystem in jeder Schleifstellung mittels des Schwenkzapfens (27) verriegelbar ist.

9. Ladewagen nach Anspruch 1, dadurch gekennzeichnet, daß die Unterwand des Förderkanals mit den an ihr angeordneten Schneidmessern (7, 8) durch Fixierstreben (29) in verschiedenen Positionen einstellbar ist.

10. Ladewagen nach Anspruch 1, dadurch gekennzeichnet, daß den Schwenkzapfen (27) eine gemeinsame Entriegelungsvorrichtung zum gleichzeitigen Entriegeln zugeordnet ist.

**Claims**

1. Loader wagon, including a pick-up device (3) for the harvested material, a feed duct (6) which is in communication therewith and is defined by an upper wall (10) which is provided with apertures, a lowerable lower wall (11) which is provided with apertures, and two securedly mounted lateral walls, the upper wall being penetrated by conveyor tines (5) of a conveyor arrangement (4), and the lower wall being penetrated by at least one row of cutting blades (7, 8) mounted on the lower wall, and including a grinding means (23) for the cutting blades, which grinding means is provided in the region of the conveyor duct, the grinding means being disposed on a guide tube and being displaceable transversely relative to the direction of conveyance of the conveyor duct, characterised in that the guide tube (24) is permanently connected, on each side of the feed duct (6), to the lateral walls of the housing of the feed duct via a respective toggle joint system.

2. Loader wagon according to claim 1, characterised in that the toggle joint system comprises an intermediate pivot lever (25), which is rotatably mounted on the lateral wall of the feed duct, and a pivot arm (26), which is rotatably mounted thereon (25), and carries the guide tube (24) for the grinding means (23).

3. Loader wagon according to claim 2, characterised in that the guide tube (24) is a rectangular tube which is securable in a plurality of positions in the pivot arm (26) for the exact setting of the pivot radius.

4. Loader wagon according to claim 1, characterised in that the grinding means is connected to a hydraulic motor, an electric motor or a flexible shaft which is driven by the tractor.

5. Loader wagon according to any of the preceding claims, characterised in that, in the operative position of the loader wagon, the two levers (25, 26) of the toggle joint system are securable on the housing of the feed duct via a pivot pin (27), which is disposed at their point of connection.

6. Loader wagon according to claim 5, characterised in that the pivot pin, (27) is internally hollow, a spring-loaded locking bolt (31) is displaceably disposed therein, and an axially displaceable intermediate ring (32) having a cured bearing surface is disposed on the pivot pin (27), the pivot lever (26) being supported on the intermediate ring.

7. Loader wagon according to claim 6, characterised in that one of the pivot levers (26) is cranked.

8. Loader wagon according to claim 2, characterised in that the toggle joint system is lockable in each grinding position by means of the pivot pin (27).

9. Loader wagon according to claim 1, characterised in that the lower wall of the feed duct, having the cutting blades (7, 8) disposed thereon, can be set in various positions by means of securing struts (29).

10. Loader wagon according to claim 1, characterised in that the pivot pins (27) have associated therewith a common unlocking device for simultaneous unlocking.

**Revendications**

1. Remorque chargeuse avec un dispositif de ramassage (3) de la récolte, un canal d'alimentation (6) s'y raccordant, qui est délimité par une paroi supérieure (10) pourvue d'ouvertures, une paroi inférieure (11) pouvant être déplacée vers le bas, pourvue d'ouvertures et deux parois latérales stationnaires, la paroi supérieure étant traversée de pointes d'alimentation (5) d'un système d'alimentation (4) et la paroi inférieure par au moins une rangée de lames de coupe fixées à la paroi inférieure, et avec un dispositif d'affûtage (23) prévu dans la zone du canal d'alimentation, disposé sur un tube de guidage (23), pour les lames de coupe, qui est mobile transversalement à la direction d'alimentation du canal d'alimentation, caractérisée en ce que le tube de guidage (24) est relié en permanence, des deux côtés du canal d'alimentation (6,) par un système à genouillère, aux parois latérales du logement du canal d'alimentation.

2. Remorque chargeuse selon la revendication 1, caactérisée en ce que le système à genouillère se compose d'un levier pivotant intermédiaire (25) fixé rotatif à la paroi latérale du canal d'alimentation et d'un bras pivotant (26) qui lui est fixé rotatif, qui porte le tube de guidage (24) du dispositif d'affûtage (23).

3. Remorque chargeuse selon la revendication 2, caractérisée en ce que le tube de guidage (24) est un tube carré, qui peut être fixé en plusieurs positions dans le bras pivotant (26) pour l'ajustement exact du rayon de pivotement.

4. Remorque chargeuse selon la revendication 1, caractérisée en ce que le dispositif d'affûtage est relié à un moteur hydraulique, un moteur électrique ou un arbre flexible entraîné par le tracteur.

5. Remorque chargeuse selon l'une quelconque des revendications précédentes, caractérisée en ce que les deux leviers (25, 26) du système à genouillère peuvent être fixés, en position de travail de la remorque chargeuse, par un tourillon de pivotement (27), au logement du canal d'alimentation, et qui se trouve à leur point de jonction.

6. Remorque chargeuse selon la revendication 5, caractérisée en ce que le tourillon de pivotement (27) est intérieurement creux, en ce qu'à l'intérieur de lui est disposé mobile un boulon d'arrêt (31) chargé par ressort et en ce que sur le tourillon de pivotement (27) est disposée une bague intermédiaire axialement mobile (32) avec surface d'appui bombée, sur laquelle s'appuie le levier pivotant (26).

7. Remorque chargeuse selon la revendication 6, caractérisée en ce que l'un des leviers pivotants (26) est contre-coudé.

8. Remorque chargeuse selon la revendication 2, caractérisée en ce que le système à genouillère peut être verrouillé à chaque position d'affûtage au moyen du tourillon de pivotement (27).

9. Remorque chargeuse selon la revendication 1, caractérisée en ce que la paroi inférieure du canal d'alimentation peut être ajustée, avec les lames de coupe (7, 8) qui y sont disposées, à plusieurs positions au moyen d'entretoises de fixation (29).

10. Remorque chargeuse selon la revendication 1, caractérisée en ce qu'aux tourillons de pivotement (27) est affecté un système commun de déverrouillage pour le déverrouillage simultané.

Fig.1

EP 0 204 967 B1

Fig. 2

Fig.3

Fig. 4